# EUROPÄISCHE PATENTANMELDUNG

(11) **EP 1 731 821 A2**
(43) Veröffentlichungstag der Anmeldung: **13.12.2006**
(21) Anmeldenummer: 06004826.1
(22) Anmeldetag: 09.03.2006
(51) Int. Cl.: F16L 37/098

(54) **Schnellkupplung für ein Rohrsystem**

(30) Priorität: 11.03.2005 DE 102005011777
(71) Anmelder: Pass GmbH & Co. KG, 58332 Schwelm (DE); A. Kayser Automotive Systems GmbH, 37574 Einbeck (DE)
(72) Erfinder: Dalmus, Horst, 42781 Haan (DE); Koch, Christian, 38524 Sassenburg (DE); Busche, Claus-Frieder, 37547 Kreiensen-Greene (DE)
(74) Vertreter: Dammertz, Ulrich

(57) **Zusammenfassung**

Die Erfindung betrifft eine Schnellkupplung (10) für ein Rohrsystem, mit einem Anschlussstück (12), das mit einem separaten Anschlussstutzen verbindbar ist, an dem Anschlussstück (12) vorgesehenen Rastmitteln (26), die bei einem Verbinden des Anschlussstücks (12) mit dem Anschlussstutzen mit komplementären Rastmitteln des Anschlussstutzens (12) verrastbar sind, und mit an dem Anschlussstück geführten und axial dazu verschiebbaren Entriegelungsmitteln (40, 42, 44), die bei einem Verbinden des Anschlussstücks (12) mit dem Anschlussstutzen in einer Ausgangsstellung verbleiben, und die infolge eines axialen Verschiebens (x) in eine Betätigungsstellung in einer Richtung weg von dem Anschlussstutzen die Rastmittel (26) des Anschlussstücks (12) außer Eingriff mit den Rastmitteln des Anschlussstutzens bringen, so dass das Anschlussstück (12) von dem Anschlussstutzen abnehmbar ist.

## Beschreibung

Die Erfindung betrifft eine Schnellkupplung für ein Rohrsystem.

Schnellkupplungen für ein Rohrsystem zum Verbinden von Schläuchen, Leitungen und dergleichen sind hinlänglich bekannt und insbesondere dort anzutreffen, wo ein schnelles Verbinden bzw. ein Lösen von zwei Teilen ohne großen Montageaufwand erforderlich ist. Solche Schnellkupplungen sind zum Beispiel in der DE 3843995C2, DE 3727858A1, DE 2657215, DE 9405775U oder der DE 10020939A1 gezeigt. Allen diesen Schnellkupplungen ist gemeinsam, dass ein Vaterteil in Form eines Steckelementes jeweils zwei Nocken bzw. Hinterschneidungen aufweist, die einander diametral gegenüberliegend an einem Ringelement ausgebildet sind. Falls das Vaterteil mit einem Mutterteil in Form einer Buchse in Eingriff gebracht wird, hinterrasten die Nocken mit einem an dem Mutterteil entsprechend ausgebildeten Rastvorsprung. Falls das Ringelement von beiden Seiten in einem Bereich, der zwischen den Nocken liegt, von außen mit einer Kraft beaufschlagt wird, stellt sich eine Verformung des Ringelements an dieser Stelle ein, was die beiden Nocken radial nach außen voneinander weg bewegt. Infolgedessen werden die Nocken mit dem jeweiligen Rastvorsprung des Mutterteils außer Eingriff gebracht, so dass sich das Vaterteil von dem Mutterteil abnehmen lässt.

Die genannten Schnellkupplungen unterliegen im Wesentlichen zwei Nachteilen. Zum einen ist es erforderlich, das Ringelement an einer ganz bestimmten Stelle mit einer Kraft von außen zu beaufschlagen, nämlich in einem Bereich, der zwischen den beiden Nocken liegt. In Abhängigkeit vom Einsatzzweck der Schnellkupplung und vom dabei vorgegebenen Einbauraum ist es nicht immer ohne Weiteres möglich, das Ringelement an eben dieser Stelle mit der Kraft von außen zu beaufschlagen. Des Weiteren sind zum Lösen von solchen Schnellkupplungen zwei getrennte Schritte erforderlich, nämlich zunächst das Drücken des Ringelements, und anschließend - bei gleichzeitigem Drücken des Ringelements - ein Abziehen des Vaterteils von dem Mutterteil. Dies kann den Anwender in der Praxis vor Probleme stellen.

Die DE 2328567A1 zeigt eine Schnellkupplung in Form einer lösbaren Klemmvorrichtung, bei der ein an dem Vaterteil verschiebbarer Ring Rasthaken, die an dem Mutterteil angeformt sind, überdeckt. Bei geschlossener Schnellkupplung greifen die Rasthaken in an dem Vaterteil ausgebildete Ausnehmungen ein, wobei das Überdecken der Rasthaken durch den verschiebbaren Ring ein Lösen der Kupplung verhindert. Erst wenn der verschiebbare Ring gegen eine Federkraft zurückgezogen wird und dadurch die Rasthaken nach außen freigibt, können bei Aufbringen einer weiteren Zugkraft die Rasthaken außer Eingriff mit der Ausnehmung gebracht werden, um das Vaterteil von dem Mutterteil abzunehmen. Nachteilig bei dieser Schnellkupplung ist jedoch, dass es beim Abziehen des Vaterteils von dem Mutterteil gegebenenfalls zu einem Verklemmen der Rasthaken in den Ausnehmungen kommen kann.

Die DE 4118463A1 zeigt eine Verbindungsanordnung für den Kühlkreislauf von Motoren, bei der zwei rohrförmige Körper mittels einer Schnellkupplung zusammengefügt sind. An einem der beiden rohrförmigen Körper ist wie bereits erläutert ein Ringelement mit diametral gegenüber liegenden Nocken vorgesehen, wobei die Nocken jeweilige an dem anderen rohrförmigen Körper ausgebildete Rastvorsprünge hintergreifen. Die Nocken sind gleichzeitig an einem freien Ende eines jeweiligen Schenkels ausgebildet, der an dem Vaterteil vorgesehen ist. Wenn das Vaterteil in das Mutterteil geschoben wird, so übergreifen die beiden Schenkel das Mutterteil, so dass die Nocken mit den an dem Mutterteil ausgebildeten Rastvorsprüngen verrasten können. Zum Auseinandernehmen der rohrförmigen Körper wird ein gabelartiges Werkzeug mit konischen Klinken in die Spalten zwischen den Schenkeln und des Mutterteils geschoben, wodurch die Schenkel radial nach außen gepresst werden. Im Ergebnis werden die Nocken über den äußeren Durchmesser der Rastvorsprünge angehoben, so dass die beiden rohrförmigen Körper durch Auseinanderziehen voneinander gelöst werden können. Die Notwendigkeit der Verwendung eines solchen Spezialwerkzeugs ist für viele Anwendungsfälle nicht als vorteilhaft anzusehen.

Die DE 296 10 487 U1 zeigt eine Schnellkupplung für lösbare Fluidleitungen, insbesondere zwischen einem Schlauchende und einem Schlauchstutzen, mit einer Steckervorrichtung, die einen Spanner und daran angeordnete Haltelaschen aufweist. Die Haltlaschen hintergreifen mindestens zwei an dem Schlauchstutzen ausgebildete Schultern. Die Steckervorrichtung läßt sich mittels massiven einstöckigen Entriegelungsrings entriegeln, mittels dem die Haltelaschen von den Halteschultern außer Eingriff bringbar sind.

Die US 2,772,898 zeigt eine Schnellkupplung gemäß dem Oberbegriff von Anspruch 1.

Der Erfindung liegt die Aufgabe zugrunde, eine Schnellkupplung zu schaffen, die mit einfachen Mitteln eine einfachste Bedienbarkeit insbesondere beim Lösen gewährleistet.

Erfindungsgemäß wird die Aufgabe durch eine Schnellkupplung mit den Merkmalen von Anspruch 1 gelöst. Vorteilhafte Weiterbildungen der Erfindung sind Gegenstand der abhängigen Ansprüche.

Die erfindungsgemäße Schnellkupplung eignet sich insbesondere für ein Rohrsystem und umfasst ein Anschlussstück, das mit einem separaten Anschlussstutzen verbunden werden kann, Rastmittel, die an dem Anschlussstück vorgesehen sind und die mit komplementären Rastmitteln des Anschlussstutzens verrastet werden können, wenn das Anschlussstück mit dem Anschlussstutzen verbunden ist, und Entriegelungsmittel, die an dem Anschlussstück geführt sind und axial dazu verschiebbar sind. Wenn das Anschlussstück mit dem Anschlussstutzen verbunden wird, verbleiben die Entriegelungsmittel in einer Ausgangsstellung. Falls die Entriegelungsmittel in Folge eines axialen Verschiebens auf dem Anschlussstück in eine Richtung weg von dem Anschlussstutzen verschoben werden und somit in eine Betätigungsstellung gelangen, so bringen die Entriegelungsmittel die Rastmittel des Anschlussstücks außer Eingriff mit den Rastmitteln des Anschlussstutzens.

Infolgedessen lässt sich das Anschlussstück von dem Anschlussstutzen abnehmen.

Im Rahmen der vorliegenden Erfindung ist Rohrsystem als Gattungsbegriff und entsprechend in weiter Auslegung zu verstehen. Hierunter fallen sämtliche Rohre, Verbindungen, Schläuche oder dergleichen, die miteinander verbunden werden können und durch die zum Beispiel ein Fluid geleitet wird.

Die erfindungsgemäße Schnellkupplung zeichnet sich durch den wesentlichen Vorteil aus, dass ein Verschieben der Entriegelungsmittel in die Betätigungsstellung bzw. ein Ziehen an den Entriegelungsmitteln die jeweiligen Rastmittel des Anschlussstücks und des Anschlussstutzens außer Eingriff bringt und dabei gleichzeitig das Anschlussstück von dem Anschlussstutzen entfernt, sobald die genannten Rastmittel voneinander entrastet sind. Somit erfolgt ein Lösen der Schnellkupplung über eine einzige translatorische Bewegung, was eine problemlose Handhabung der Schnellkupplung gewährleistet. Insbesondere ist es nicht von Bedeutung, an welcher Stelle die Rastmittel ergriffen werden, um darauf eine Kraft zum Einleiten der Verschiebebewegung für den erläuterten gewünschten Zweck einzuleiten.

In vorteilhafter Weiterbildung weisen die Rastmittel des Anschlussstücks einen Schnapphaken auf, der mit den Rastmitteln des Anschlussstutzens außenseitig in Verbindung steht. Hierbei kann das Anschlussstück als sogenanntes Vaterteil ausgebildet sein, das sich in ein sogenanntes Mutterteil in Form des Anschlussstutzens einstecken lässt. Beim Einstecken des Anschlussstücks in den Anschlussstutzen übergreifen die Rastmittel des Anschlussstücks in einer Endstellung die Rastmittel des Anschlussstutzens, so dass dadurch eine sichere Befestigung des Anschlussstücks an dem Anschlussstutzen gewährleistet ist.

In vorteilhafter Weiterbildung sind die Rastmittel des Anschlussstücks in Form zumindest eines freikragenden Stegs ausgebildet, der an einer Außenseite des Anschlussstücks vorgesehen ist. Der Steg erstreckt sich in Richtung des Anschlussstutzens und weist an seinem freien Ende den Schnapphaken auf. Des Weiteren kann das freie Ende radial zum Anschlussstück elastisch ausgelenkt werden, wodurch beim Einstecken des Anschlussstücks in den Anschlussstutzen ein Verrasten des Schnapphakens mit den Rastmitteln des Anschlussstutzens erzielt wird.

In vorteilhafter Weiterbildung der Erfindung lässt sich der Steg aus einer im Wesentlichen achsparallelen Position bezüglich des Anschlussstücks radial elastisch auslenken. Nach einem solchen Auslenken ist der Steg bestrebt, wieder in seine genannte Ausgangslage zurück zu gelangen. Hierdurch wird gewährleistet, dass der Schnapphaken bei eingestecktem Anschlussstück in Verrastung mit den Rastmitteln des Anschlussstutzens verbleibt, d.h. in seiner Ausgangslage. Anders ausgedrückt, ist ein selbsttätiges und ungewolltes Entriegeln des Schnapphakens in Folge der Federvorspannung nicht ohne Weiteres möglich.

Zweckmäßigerweise können an dem Anschlussstück eine Mehrzahl von freikragenden Stegen vorgesehen sein, an deren jeweiligen Enden ein Schnapphaken ausgebildet ist. Ein gleichmäßiges und störungsfreies Aufstecken des Anschlussstücks auf den Anschlussstutzen ist durch die gegenüberliegend angeordneten Stege gegeben, durch zwei in einem Winkel von 180° beabstandete Stege. Eine solche Ausführungsform lässt sich beispielsweise als Kunststoff- Spritzgussteil herstellen, wobei sich bei der Konzeption der beiden Werkzeughälften als einfaches Auf-zu-Werkzeug keine Schwierigkeiten ergeben.

In einer alternativen Ausführungsform können an dem Anschlussstück vier Stege angeordnet sein, die jeweils in einem Winkel von 90° voneinander beabstandet sind. Eine solche Ausführungsform lässt sich durch geeignete Modifikationen am Werkzeug (Werkzeugschieber) ebenfalls als Kunststoff-Spritzgussteil herstellen.

In vorteilhafter Weiterbildung können die Entriegelungsmittel, falls sie in ihre Betätigungsstellung verschoben werden, den Schnapphaken radial nach außen drücken. Hierdurch wird der Schnapphaken ausreichend nach außen bewegt, so dass seine Hinterschneidung außer Eingriff mit den Rastmitteln des Anschlussstutzens gelangt und sich das Anschlussstück von dem Anschlussstutzen abnehmen bzw. abziehen lässt.

Für ein klemmfreies und schnelles Aufstecken des Anschlussstücks auf den Anschlussstutzen kann eine Stirnseite des freien Endes des Stegs, die dem Anschlussstutzen zugewandt ist, mit einer Anlaufschräge versehen sein. Hierdurch wird beim Aufsetzen des Anschlussstücks auf den Anschlussstutzen der Steg gegebenenfalls leicht radial nach außen ausgelenkt, so dass die Anlaufschräge beim weiteren Aufschieben des Anschlussstücks auf den Anschlussstutzen solange auf der Oberfläche des Anschlussstutzens läuft, bis der Schnapphaken mit den Rastmitteln des Anschlussstutzens verrastet. Die Rastmittel des Anschlussstutzens können beispielsweise durch eine einfache Rampe oder dergleichen gebildet sein, deren Hinterschneidung komplementär zu der des Rasthakens ausgebildet ist.

In vorteilhafter Weiterbildung der Erfindung sind auch die Entriegelungsmittel mit einer Schräge versehen, die komplementär zu der Anlaufschräge des freien Endes des Stegs ausgebildet ist. Durch ein Zusammenwirken der beiden Schrägen resultiert bei einem Verschieben der Entriegelungsmittel axial auf dem Anschlussstück eine vorteilhaft größere Steighöhe des Schnapphakens. Dies bedeutet, dass bereits eine verhältnismäßig geringe Verschiebestrecke der Entriegelungsmittel zu dem gewünschten Entrasten des Schnapphakens, wie voranstehend erläutert, führt.

In vorteilhafter Weiterbildung der Erfindung hintergreift die Schräge der Entriegelungsmittel in deren Ausgangsstellung die Anlaufschräge des freien Endes des Stegs zumindest teilweise. Alternativ dazu kann die Schräge der Entriegelungsmittel in der Ausgangsstellung die Anlaufschräge des freien Endes des Stegs auch vollständig hintergreifen. Hierdurch ist gewährleistet, dass unmittelbar nach dem Beginn des Verschiebens der Entriegelungsmittel eine Bewegung des Schnapphakens radial nach außen einsetzt, was den erforderlichen Verschiebeweg der Entriegelungsmittel vorteilhaft reduziert.

In vorteilhafter Weiterbildung können an dem Anschlussstück Verliersicherungen vorgesehen sein, die ein beidseitiges Abgleiten der Entriegelungsmittel von dem Anschlussstück infolge eines axialen Verschiebens dazu verhindern. An einem hinteren Rand des Anschlussstücks, d.h. an einer dem Anschlussstutzen entgegengesetzten Seite kann zumindest ein Anschlagselement in Form einer radialen Erhebung oder dergleichen ausgebildet sein, mit dem die Entriegelungsmittel in ihrer Betätigungsstellung in Anlagekontakt kommen. Zweckmäßigerweise sind entlang des Umfangs des Anschlussstücks in einer Ebene senkrecht zur Längsachse des Anschlussstücks eine Mehrzahl von Anschlagselementen ausgebildet, die einen gleichen Abstand zueinander aufweisen. Ein unbeabsichtigtes Abgleiten der Entriegelungsmittel nach hinten kann somit in jedem Fall verhindert werden.

Die Anschlagselemente erfüllen darüber hinaus den Zweck, dass die translatorische Kraft, die beim Verschieben bzw. beim Ziehen der Entriegelungsmittel in eine Richtung weg von dem Anschlussstutzen aufgebracht wird, bei einem In-Anlage-Kommen der Entriegelungsmittel in die Anschlagselemente eingeleitet und damit auf das Anschlussstück übertragen wird. Dadurch lässt sich im Ergebnis das Anschlussstück sehr kraftökonomisch von dem Anschlussstutzen abziehen.

Für eine Verliersicherung der Entriegelungsmittel an einem vorderen Rand des Anschlussstücks, d.h. an einer dem Anschlussstutzen gegenüberliegenden Seite des Anschlussstücks kann an zumindest einer Längsseite des Stegs eine Ausnehmung ausgebildet sein. Des Weiteren kann dazu entsprechend an den Entriegelungsmitteln zumindest ein elastischer freikragender Haken vorgesehen sein, der sich in Richtung des Anschlussstutzens erstreckt und gegen den Steg vorgespannt ist. In der Ausgangsstellung der Entriegelungsmittel befindet sich das freie Ende des Hakens in Eingriff mit der Ausnehmung, was ein weiteres Verschieben der Entriegelungsmittel zum vorderen Rand des Anschlussstücks verhindert. Demgegenüber gelangt bei einem Verschieben der Entriegelungsmittel in die Betätigungsstellung der Haken außer Eingriff mit der Ausnehmung. Bei einem weiteren Verschieben der Entriegelungsmittel weg von dem Anschlussstutzen stoßen sie dann an den hinteren Rand des Anschlussstücks gegen das zumindest eine Anschlagselement, wie voranstehend bereits erläutert. Hierdurch ist ein Abgleiten der Entriegelunsgmittel von dem Anschlussstück beidseits verhindert.

In vorteilhafter Weiterbildung der Erfindung weist das Anschlussstück an seiner Außenseite eine Führungsfläche auf, wobei die Entriegelungsmittel ringförmig ausgebildet sind. Somit sind die Entriegelungsmittel in Form eines Ringelements für ein axiales Verschieben bezüglich des Anschlussstücks auf der Führungsfläche geführt. Der Durchmesser des Entriegelungsrings ist dabei so groß bemessen, dass er eine Außenumfangsfläche des Anschlussstücks umfasst.

Zweckmäßigerweise kann ein Außendurchmesser der Führungsfläche, auf der der Entriegelungsring geführt ist, auf einem Innendurchmesser des Entriegelungsrings geeignet angepasst sein. Hierdurch ist eine reibungsarme Führung des Entriegelungsrings auf dem Anschlussstück ohne ein Verkanten, Verklemmen oder dergleichen sichergestellt.

In vorteilhafter Weiterbildung der Erfindung kann der Entriegelungsring aus einem vorderen Ring und einem hinteren Ring, d.h. als Doppelring gebildet sein. Der vordere Ring des Entriegelungsrings befindet sich gegenüberliegend zum Anschlussstutzen, d.h. er ist an dem freien Ende des Anschlussstücks angeordnet. Die vorstehend genannte Schräge der Entriegelungsmittel, die mit der Anlaufschräge des freien Endes des Stegs zusammenwirkt, ist dabei an einem Umfangsabschnitt des vorderen Rings ausgebildet. Des Weiteren dient der hintere Ring zur Führung des Entriegelungsrings auf der Führungsfläche des Anschlussstücks.

Der vordere Ring und der hintere Ring des Entriegelungsrings sind zweckmäßigerweise über zumindest einen sogenannten Brückenabschnit mit einander verbunden, der aus zwei Verbindungsstegen gebildet ist. Die beiden Verbindungsstege des Brückenabschnitts sind derart voneinander beabstandet, dass sie zwischen sich den freikragenden Steg einschließen und dabei ein Auslenken des Stegs radial nach außen zulassen. Für eine gleichmäßige Anbindung des zweiten Rings an den ersten Ring empfehlen sich beispielsweise zwei diametral gegenüber liegende Brückenabschnitte, oder auch vier Brückenabschnitte, die jeweils in einem Winkel von 90° zueinander beabstandet sind.

Bei zwei oder auch vier Brückenabschnitten, die den vorderen Ring mit dem hinteren Ring verbinden, weist der Entriegelungsring zwischen diesen Ringen kein weiteres Material auf. Dadurch ist ein einfaches Greifen allein des hinteren Rings für ein Verschieben des Entriegelungsrings in die Betätigungsstellung, bzw. für ein Ziehen des Entriegelungsrings weg von dem Anschlussstutzen gewährleistet. Mittels der Brückenabschnitte wird die auf den hinteren Ring aufgebrachte Zugkraft gleichmäßig auf den vorderen Ring übertragen, so dass die an dem vorderen Ring ausgebildete Schräge mit der Anlaufschräge des Schnapphakens zusammenwirken kann, um die gewünschte Entriegelung des Schnapphakens herbeizuführen.

Wie voranstehend bereits erläutert, bewirkt somit ein axiales Verschieben des Entriegelungsrings in seine Betätigungsstellung bzw. ein Ziehen daran ein gleichzeitiges Lösen des Anschlussstücks von dem Anschlussstutzen.

Für ein sicheres Abdichten der Rohrverbindung zwischen dem Anschlussstück und dem Anschlussstutzen kann an der Außenumfangsfläche des Anschlussstücks zumindest ein O-Ring angeordnet sein. Hierfür ist in der Außenumfangsfläche des Anschlussstücks in einer Ebene senkrecht zur Längserstreckung des Anschlussstücks eine Nut eingebracht, in die sich der O-Ring setzt. Alternativ dazu können auch eine Mehrzahl von O-Ringen an der Außenfläche des Anschlussstücks, in Form einer Reihenschaltung, angeordnet sein. Somit lässt sich eine optimale Abdichtung des Anschlussstücks gegenüber dem Anschlussstutzen erreichen, wenn diese beiden Bauelemente ineinander gesteckt sind und durch den oder die Schnapphaken miteinander verrastet sind.

Das Anschlussstück als auch der Entriegelungsring lassen sich besonders vorteilhaft aus einem Kunststoff herstellen. Für eine kosten- und zeitsparende Massenfertigung eignet sich insbesondere das Kunststoff-Spritzgiessen. Ein Kunststoff, der sich vor allem starken Temperaturschwankungen, Witterungseinflüssen oder dergleichen widersetzt, ist Polyamid, zum Beispiel ein Polyamid 66. Weitere Kunststofftypen, die sich zur Herstellung der erfindugsgemäßen Schnellkupplung eignen, sind zum Beispiel Polyamid 12, POM, PPS oder dergleichen. Gegebenenfalls sind diese Kunststoffe faserverstärkt, zum Beispiel durch Glasfasern. Die genannten Kunststofftypen eignen sich zum Beispiel bei einer Verwendung im Automobilbau, wobei sie Temperaturen von 150° bis 170°, die im Motorraum vorherrschen können, ohne Weiteres widerstehen.

Die erfindungsgemäße Schnellkupplung eignet sich insbesondere für ein schnelles und problemloses Montieren von Schläuchen, Leitungen und dergleichen im Automobilbau. Beispielsweise kann die erfindungsgemäße Schnellkupplung für den Bereich Kurbelgehäuseentlüftung, Sekundärluftführung sowie Unterdrucksteuerung eingesetzt werden. Die erfindungsgemäße Schnellkupplung ist vollständig kompatibel zu den am Markt verfügbaren bekannten Schnellkupplungsstutzen für die soeben genannten Einsatzgebiete. Im Vergleich zu den bereits bestehenden Systemen, bei denen zum Lösen der Kupplung zumeist eine Druckkraft mit einer Zugkraft überlagert werden muss, ist die Demontage der erfindungsgemäßen Schnellkupplung infolge der ausschließlich aufzubringenden Zugkraft deutlich einfacher. Bei einem gleichmäßigen Zug am Entriegelungsring wird nicht nur die Kupplung geöffnet, d.h. der Schnapphaken außer Eingriff mit den Rastmitteln des Anschlussstutzens gebracht, sondern auch gleichzeitig das Anschlussstück von dem Anschlussstutzen abgezogen.

Weitere Vorteile und Ausgestaltungen der Erfindung ergeben sich aus der Beschreibung und der beiliegenden Zeichnungen.

Es versteht sich, dass die vorstehend genannten und die nachstehend noch zu erläuternden Merkmale nicht nur in der jeweils angegebenen Funktion, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im Folgenden unter Bezugnahme auf die Zeichnung ausführlich beschrieben.
- Fig. 1: zeigt eine perspektivische Darstellung eines Anschlussstücks einer erfindungsgemäßen Schnellkupplung.
- Fig. 2: zeigt eine perspektivische Darstellung eines Entriegelungsrings der erfindungsgemäßen Schnellkupplung, der zur Montage mit dem Anschlussstück von Fig. 1 vorgesehen ist.
- Fig. 3: zeigt eine perspektivische Darstellung der erfindungsgemäßen Schnellkupplung, bei der der Entriegelungsring von Fig. 2 auf das Anschlussstück von Fig. 1 montiert ist.
- Fig. 4: zeigt eine weitere Ausführungsform einer erfindungsgemäßen Schnellkupplung ähnlich zu der von Fig. 3.
- Fig. 5: zeigt die erfindungsgemäße Schnellkupplung von Fig. 3 in einer Ansicht von vorne.
- Fig. 6: zeigt die Schnellkupplung in einer Schnittansicht entlang der Linie B-B von Fig. 5.
- Fig. 7: zeigt die Schnellkupplung in einer Schnittansicht entlang der Linie A-A von Fig. 5.
- Fig.8: zeigt die Schnellkupplung in einer Schnittansicht gemäß einer alternativen Ausführungsform.

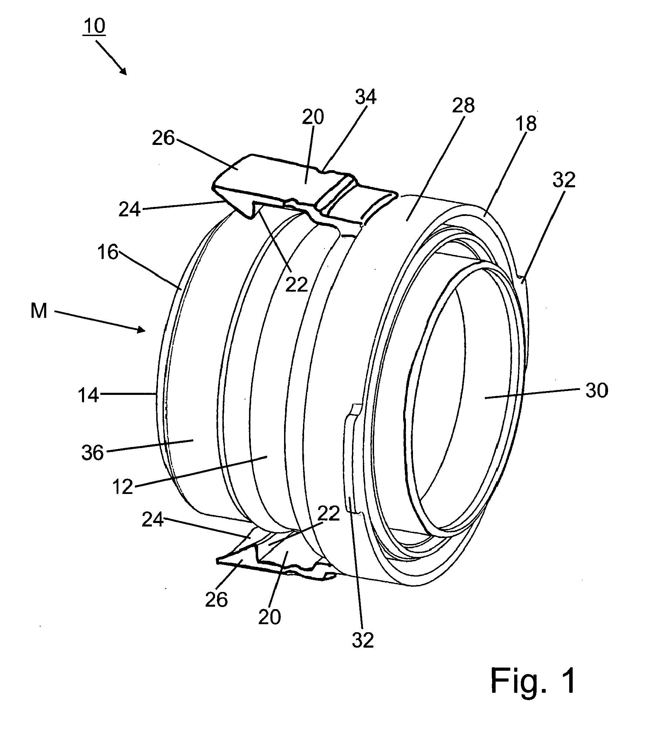

In den nachfolgenden Figuren 1-8 sind bevorzugte Ausführungsformen einer erfindungsgemäßen Schnellkupplung im Einzelnen erläutert. Gleiche Bauteile sind hierbei mit gleichen Bezugszeichen versehen und zur Vermeidung von Wiederholungen lediglich einmal erläutert.

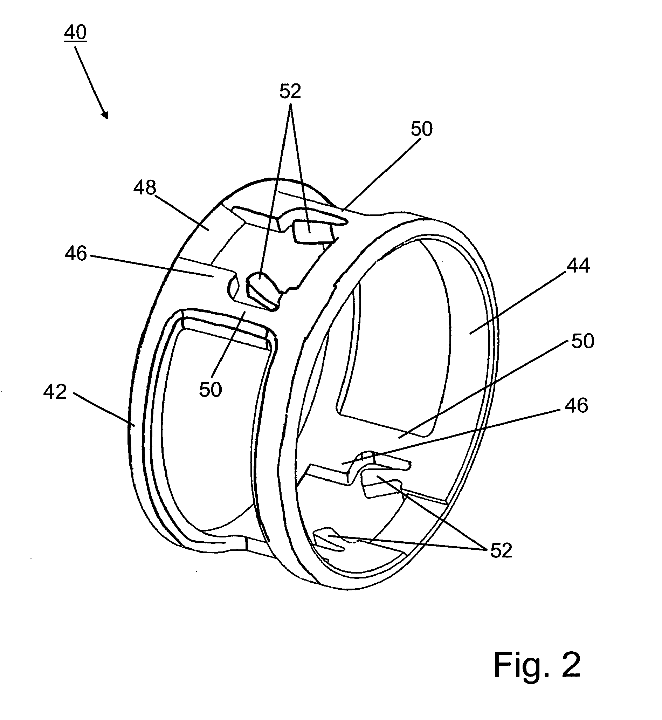

Die erfindungsgemäße Schnellkupplung 10 umfasst im Wesentlichen ein Anschlussstück 12 und daran montierte Entriegelungsmittel in Form eines Entriegelungsrings (Fig. 2). Das Anschlussstück 12 kann vorteilhaft rohrförmig ausgebildet sein, zum Beispiel kreiszylindrisch wie in Fig. 1 gezeigt. Es weist ein vorderes Ende 14 auf, das zum Anschluss an einen (nicht gezeigten) Anschlussstutzen vorgesehen ist. Für ein klemmfreies Einführen des Anschlussstücks 12 in den Anschlussstutzen ist das vordere Ende 14 mit einer Abschrägung 16 versehen.

Von einem hinteren Rand 18 des Anschlussstücks 12 aus erstrecken sich diametral einander gegenüberliegend zwei freikragende Stege 20 in Richtung des vorderen Endes 14 des Anschlussstücks. An dem freien Ende eines jeweiligen Stegs 20 ist eine Hinterschneidung 22 ausgebildet, die in Verbindung mit einer Anlaufschräge 24 einen Schnapphaken 26 ausbildet.

Die beiden Stege 20 erstrecken sich an der Außenseite des Anschlussstücks 12 im Wesentlichen achsparallel dazu und lassen zwischen sich und der Außenumfangsfläche 36 des Anschlussstücks 12 jeweils einen Spalt frei. Dieser Spalt ist an die Wanddicke des (nicht gezeigten) Anschlussstutzens angepasst. Somit sind die beiden Schnapphaken 26 mit ihren Anlaufschrägen 24 bei einem Aufsetzen des Anschlussstutzens auf das Anschlussstück 12 entweder in Kontakt oder aber zumindest in der Nähe einer Oberfläche des Anschlussstutzens, so dass es bei vollständig aufgesetztem Anschlussstutzen zu einer Verrastung der Schnapphaken 26 mit komplementär dazu ausgebildeten Rastmitteln des Anschlussstutzens kommt. Durch die frei tragende Anordnung der Stege 20 ist ein elastisches Auslenken der Schnapphaken 26 in radialer Richtung bezüglich des Anschlussstücks 12 möglich. Hierdurch ist ein problemloses Verrasten der Schnapphaken 26 mit den Rastmitteln des Anschlussstutzens bei einem Zusammenfügen des Anschlussstücks und des Anschlussstutzens sichergestellt. Insbesondere ist durch die Vorspannung der Stege in die in Fig. 1 gezeigten Position ein selbsttätiges und ungewolltes Entrasten der Schnapphaken 26 von den Rastmitteln des Anschlussstutzens unterbunden. Ein Lösen des Anschlussstücks 12 von dem Anschlussstutzen ist deshalb ohne weiteres nicht möglich.

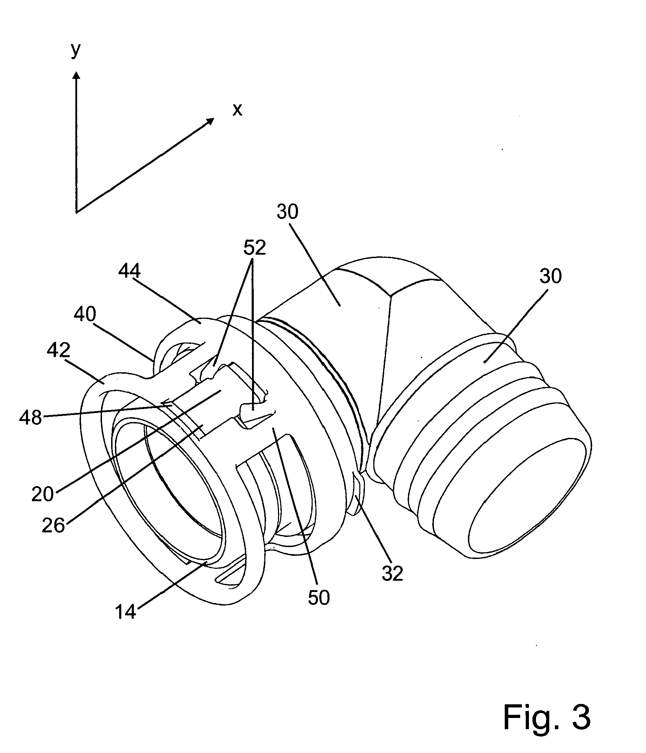

Das hintere Ende 18 des Anschlussstücks 12 weist über eine bestimmte axiale Strecke einen gleichförmigen Durchmesser auf und bildet dadurch eine Führungsfläche 28. Diese Führungsfläche 28 dient zur Führung eines Entriegelungsrings, um diesen axial bezüglich des Anschlussstücks 12 zu verschieben (vgl. Erläuterung zu Fig. 3).

Das in der Fig. 1 rechts gezeigte Rohrinnenteil 30, das sich innerhalb der Führungsfläche 28 befindet, setzt sich je nach Ausführungsform in einer Verlängerung fort. Es kann zum Beispiel zu einem Winkelstück von 90° oder dergleichen abgewinkelt (Fig. 3) oder sonstwie an den gewünschten Einsatzzweck eines Rohrsystems angepasst sein.

Fig. 2 zeigt eine perspektivische Darstellung eines Entriegelungsrings 40, der aus einem vorderen Ringelement 42 und aus einem hinteren Ringelement 44 besteht. Das vordere Ringelement 42 und das hintere Ringelement 44 sind durch zwei sogenannte Brückenabschnitte 46 mit einander verbunden, die diametral einander gegenüberliegend sind.

Der Entriegelungsring 40 ist zur Montage auf das Anschlussstück 12 aus der Richtung des in der Fig. 1 gezeigten Pfeils M vorgesehen. Ein Innendurchmesser des hinteren Ringelements 44 ist geeignet auf einen Außendurchmesser der Führungsfläche 28 abgestimmt, so dass dadurch ein Hin- und Hergleiten des hinteren Ringelements 44 auf der Führungsfläche 28 möglich ist. Anders ausgedrückt, gewährleistet die Führung des hinteren Ringelements 44 auf der Führungsfläche 28 ein axiales Verschieben (x) des Entriegelungsrings 40 bezüglich des Anschlussstücks 12. Ein Abgleiten nach hinten, d.h. über das hintere Ende 18 des Anschlussstücks 12 hinaus ist durch eine Mehrzahl von Anschlagselementen 32 verhindert, die in Form einer radialen Erhebung an dem Rand der Führungsfläche 28 ausgebildet sind.

An dem vorderen Ringelement 42 sind im Bereich der Brückenabschnitte 46 jeweils eine Schräge 48 ausgebildet, deren Neigungswinkel komplementär zu dem Neigungswinkel der Anlaufschräge 24 der beiden Schnapphaken 26 ist. Das Zusammenwirken der Schräge 48 mit der Anlaufschräge 24 nachstehend wird noch im Detail erläutert.

Die beiden Brückenabschnitte 46 des Entriegelungsrings 40 sind jeweils aus zwei Verbindungsstegen 50 gebildet, die in Anpassung an eine Breite des Stegs 20 voneinander beabstandet sind. Ausgehend von dem hinteren Ringelement 44 erstrecken sich an jedem Brückenabschnitt 46 jeweils zwei freikragende Haken 52 nach vorne in Richtung des vorderen Ringelements 42. Diese Haken 52 dienen als Verliersicherung für den Entriegelungsring 40, wenn dieser auf das Anschlussstück 12 montiert ist.

Bei einem Montieren des Entriegelungsrings 40 auf das Anschlussstück 12 werden die jeweiligen freien Enden der beiden Stege 20 radial nach innen gedrückt, so dass sich das hintere Ringelement 44 darüber schieben lässt, bis es in Anlage mit der Führungsfläche 28 an dem hinteren Ende 18 des Anschlussstücks 12 kommt. Fig. 3 zeigt eine perspektivische Ansicht der Schnellkupplung 10, wenn der Entriegelungsring 40 vollständig auf das Anschlussstück 12 montiert ist. In der Darstellung von Fig. 3 befindet sich der Entriegelungsring 40 in einer Ausgangsstellung, von der sich der Entriegelungsring 40 auf der Führungsfläche 28 axial zum hinteren Ende 18 verschieben bzw. ziehen lässt (in x- Richtung).

Im montierten Zustand des Entriegelungsrings 40 fassen die jeweiligen Verbindungsstege 50 des Brückenabschnitts 46 einen jeweiligen Steg 20 mittig ein. Die Verbindungsstege 50 sind jedoch hierbei geringfügig von den Längsseiten der Stege 20 beabstandet, so dass kein Verklemmen zwischen diesen Elementen auftritt und sich der Entriegelungsring 40 axial verschieben lässt. Durch die Wechselwirkung der Verbindungsstege 50 und dem jeweils darin mittig aufgenommenen Steg 20 ist eine seitliche Führung des Entriegelungsrings 40 gegeben, die ein willkürliches Verdrehen des Entriegelungsrings 40 auf der Führungsfläche 28 verhindert. Die Beabstandung der Verbindungsstege 50 gewährleistet des Weiteren auch eine mögliche Auslenkung der Schnapphaken 26 radial nach außen. Im montierten Zustand des Entriegelungsrings 40 untergreifen die Schrägen 48 teilweise die Anlaufschrägen 24 der beiden Schnapphaken 26 und stehen somit mit diesen in Eingriff.

In der in Fig. 3 gezeigten Ausgangsstellung des Entriegelungsrings (40) greifen die Haken 52 mit ihren freien Enden in jeweilige Aussparungen 34 ein, die an den Seitenflächen der Stege 20 ausgebildet sind. Dadurch ist ein weiteres Nach-vorne-Gleiten des Entriegelungsrings 40 auf der Führungsfläche 28 in Richtung des vorderen Endes 14 des Anschlussstücks 12 verhindert. Somit bilden die Haken 52 in Verbindung mit den Aussparungen 34 eine Verliersicherung für den Entriegelungsring 40 gegen Abgleiten, d.h. zum vorderen Rand 14. Die seitliche Führung der Stege 20 zwischen den Verbindungsstegen 50 und das Eingreifen der Haken 52 in die Aussparungen 34 gewährleistet überdies einen verhältnismäßig festen Sitz des Entriegelungsrings 40 in seiner Ausgangsstellung, um unerwünschten Rappelgeräuschen oder dergleichen im Anwendungsfall, zum Beispiel beim Einsatz in Kraftfahrzeugen vorzubeugen.

Bei der Montage der Schnellkupplung 10 wird diese mit einem jeweils daran anmontierten Schlauch oder Rohr auf das am Gerät befindliche Gegenstück in Form des Anschlussstutzens aufgeschoben. Durch die Anlaufschrägen 24 und gegebenenfalls durch an einer Stirnseite des Anschlussstutzens angeformte Schrägen werden die Schnapphaken 26 nach außen geführt und gleiten beim Aufschieben der Schnellkupplung 10 entlang einer Außenumfangsfläche des Anschlussstutzens, bis die Schnapphaken wegen ihrer Federvorspannung mit den Rastmitteln des Anschlussstutzens verrasten. Bei diesem Montagevorgang ist der Entriegelungsring 40 nicht beteiligt und sitzt dabei lose auf der Führungsfläche 28. Auch wenn der Entriegelungsring 40 wie in Fig. 3 gezeigt auf das Anschlussstück 12 montiert ist, ist ein Auslenken der Stege 20 bzw. der Schnapphaken 26 radial nach außen durch die Verbindungsstäbe 50 hindurch infolge eines Aufschiebens des Anschlussstutzens ohne Weiteres möglich. Aufgrund des freien Spiels der Stege 20 im Bereich der Brückenabschnitte 46 ist der Entriegelungsring 40 bei einem Montagevorgang für eine Verbindung des Anschlussstücks 12 mit dem Anschlussstutzen nicht beteiligt.

Im folgenden ist ein Lösen der Schnellkupplung 10 zum Abnehmen des Anschlussstücks 12 von dem Anschlussstutzen unter Beteiligung des Entriegelungsrings 40 ausführlich erläutert.

Zu Beginn des Demontagevorgangs erfasst eine Bedienperson das hintere Ringelement 44 und zieht dieses von dem vorderen Ende 14 des Anschlussstücks, d.h. von dem Anschlussstutzen weg. Hierdurch wird das hintere Ringelement 44 auf der Führungsfläche 28 axial nach hinten zum hinteren Ende 18 des Anschlussstücks 12 verschoben. Durch dieses axiale Verschieben wirkt nun die an dem vorderen Ringelement 42 ausgebildete Schräge 48 gegen die Anlaufschräge 24 an den jeweiligen Schnapphaken 26 und drückt diese dadurch radial nach außen. Der Entriegelungsring 40 lässt sich soweit nach hinten ziehen, bis das hintere Ringelement 44 in Anschlag mit den Anschlagelementen 32 kommt. Für diesen Fall befindet sich das Entriegelungselement 40 in seiner Betätigungsstellung, wobei durch die vorstehend genannte Wechselwirkung der Schrägen 48 mit den Anlaufschrägen 24 die Schnapphaken 26 radial nach außen ausgelenkt sind. Die Neigung der Schrägen bzw. Anlaufschrägen ist dabei ausreichend groß bemessen, dass in der Betätigungsstellung des Entriegelungsrings 40 die Hinterschneidung 22 der Schnapphaken 26 außer Eingriff mit den Rastmitteln des Anschlussstutzens gelangt sind. Wird folglich weiter eine Zugkraft auf das Ringelement 44 ausgeübt, so wird diese Kraft wegen der Anlage des hinteren Ringelements 44 an den Anschlagelementen 32 auf das Anschlagstück 12 übertragen, so dass Letzteres vollständig von dem Anschlussstutzen entfernt werden kann.

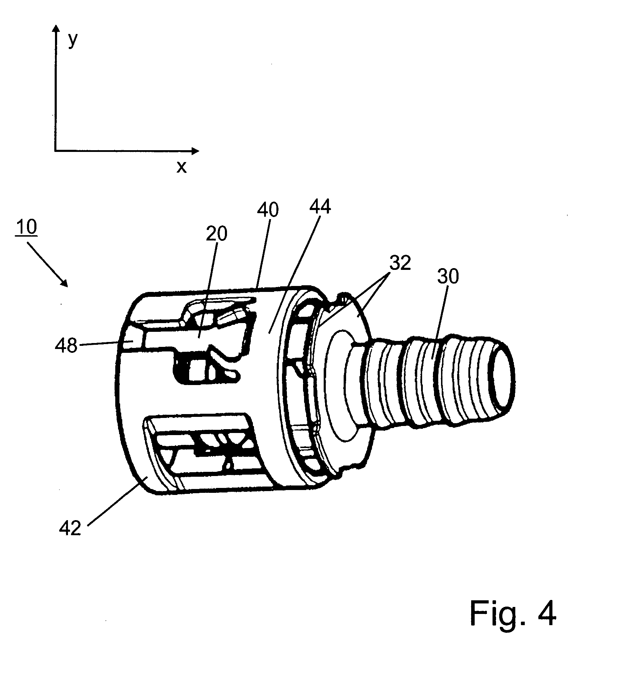

Die Darstellung von Fig. 3 zeigt einen möglichen weiteren Verlauf des Innenrohrs 30, das in ein um 90° abgewinkeltes Verbindungsteil übergeht. Alternativ, dazu kann das Innenrohr 30 auch geradlinig erstreckt ausgeführt sein, wie es in der perspektivischen Ansicht von Fig. 4 gezeigt ist. In jedwedem Fall gewährleistet zum Beispiel eine Tannenbaumstruktur an dem Verbindungsteil 30 ein betriebssicheres und dichtendes Aufschieben eines Anschlussschlauches oder dergleichen. Der in Fig. 4 gezeigte Spalt zwischen den Anschlagselementen 32 und einem Randabschnitt des hinteren Ringelements 44 macht nochmals die verfügbare Strecke deutlich, um die sich der Entriegelungsring 40 auf der Führungsfläche 28 verschieben lässt.

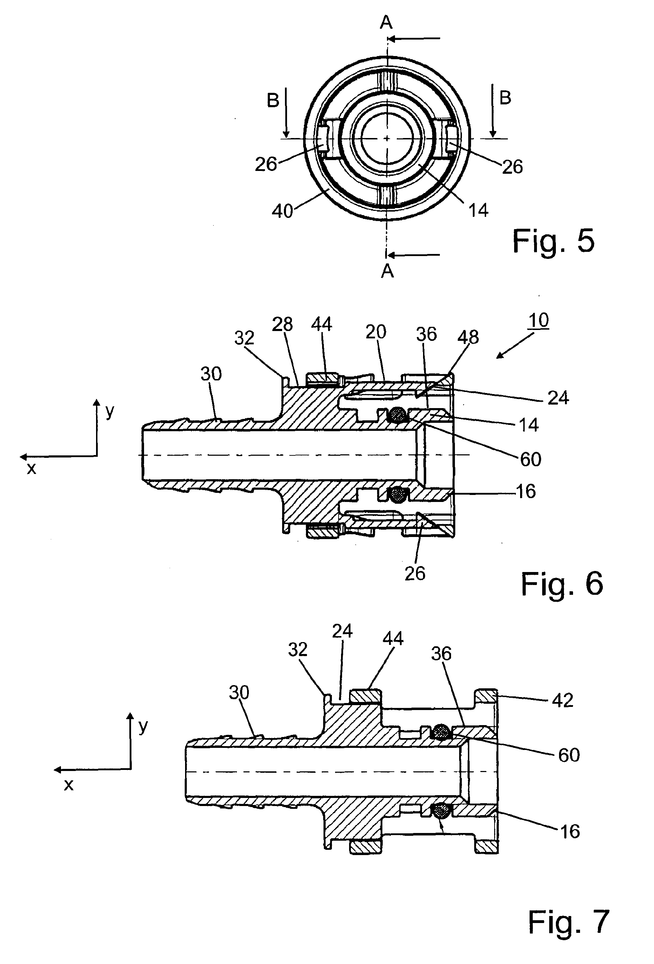

Die Fig. 5 zeigt eine Draufsicht auf die Schnellkupplung 10 mit Blick auf das vordere Ende 14 bei montiertem Entriegelungsring 40. Die Fig. 6 zeigt die Schnellkupplung 10 in einem Schnitt entlang der Linie B-B von Fig. 5 und die Fig. 7 zeigt die Schnellkupplung in einer Schnittansicht entlang der Linie A-A von Fig. 5.

In der Schnittansicht von Fig. 6 ist der Entriegelungsring 40 in seiner Ausgangsstellung gezeigt. Deutlich zu erkennen ist, dass die an dem vorderen Ringelement 42 ausgebildeten Schrägen 48 an ihren den Schnapphaken gegenüber liegenden Enden die Anlaufschrägen 24 teilweise untergreifen. Bei einem axialen Verschieben des Entriegelungsrings 40 auf der Führungsfläche 28 nach hinten (in x-Richtung) werden die Schnapphaken 26 durch das ebenfalls nach hinten wandernde vordere Ringelement 42 wegen des Eingriffs der Schrägen 48 mit den Anlaufschrägen 24 zwangsweise radial nach außen ausgelenkt (in y-Richtung). In der Betätigungsstellung des Entriegelungsrings 40, wenn das hintere Ringelement 44 an den Anschlagelementen 32 anschlägt, ist die radiale Auslenkung der Schnapphaken 26 ausreichend groß, so dass die jeweiligen Hinterschneidungen 22 außer Eingriff mit den Rastmitteln des (nicht gezeigten) Anschlussstutzens gelangen. Gemäß der Erläuterung von Fig. 3 bewirkt ein weiteres Ziehen an dem hinteren Ringelement 44 (in der Fig. 6 nach links) gleichzeitig ein Ziehen an dem Anschlussstück 12, so dass sich folglich das Anschlussstück 12 von dem Anschlussstutzen vollständig abnehmen lässt.

Für eine verbesserte Dichtigkeit zwischen Anschlussstück 12 und Anschlussstutzen kann an der Außenumfangsfläche 36 des Anschlussstücks 12 ein O-Ring 60 angeordnet sein, wie es in den Figuren 6 und 7 zu erkennen ist. Die Dicke des O-Rings 60 ist dabei so bemessen, dass sich beim Verbinden des Anschlussstücks 12 mit dem Anschlussstutzen die Wandung des Anschlussstutzens störungsfrei in den Spalt zwischen den Stegen 20 und der Außenumfangsfläche des Anschlussstücks 12 einführen lässt.

Die in den vorstehenden Figuren erläuterte Schnellkupplung 10 zeichnet sich durch mehrere signifikante Vorteile aus. Sie ist vollständig kompatibel zu den am Markt verfügbaren Schnellkupplungsstutzen und kann somit für bereits gegebene Pumpen, Verteiler oder dergleichen verwendet werden. Die Schnellkupplung 10 ist so ausgelegt, dass die bisherigen Gerätestutzen nicht geändert werden müssen. Sowohl die verdrehsicheren als auch die frei drehbaren Anschlüsse müssen nicht an die Schnellkupplung 10 angepasst werden.

Die Demontage der Schnellkupplung 10 erfolgt deutlich einfacher als bei den bestehenden Systemen. Ein gleichmäßiger Zug an dem hinteren Ringelement 44 entriegelt nicht nur die Schnapphaken 26 von den Rastmitteln des Anschlussstutzens, sondern entfernt gleichzeitig das Anschlussstück 12 davon.

Des Weiteren können die bisher notwendigen Varianten der Kupplung hinsichtlich einer vorab festgelegten Stellung des Löserings, die zum Aufbringen einer Drucklösekraft eingeschränkt ist, entfallen, da ein Lösen der Schnellkupplung 10 in nahezu jeder beliebigen Stellung erfolgen kann, weil sie allein durch Aufbringen einer Zugkraft gelöst wird. Es ist unerheblich, in welcher Stellung an dem Entriegelungsring 40 gezogen wird, um die Schnellkupplung 10 zu demontieren. Des Weiteren ist das Lösen der Schnellkupplung 10 mit vergleichsweise geringem Kraftaufwand möglich.

Die Herstellung der einzelnen Komponenten der Schnellkupplung 10, bis auf den O-Ring 60, erfolgt aus üblichen technischen Kunststoffen, zumeist glasfaserverstärkt. Besonders geeignete Kunststofftypen sind Polyamid 66, Polyamid 12, POM, PPS oder dergleichen. Zweckmäßigerweise kann der Entriegelungsring 40 im Vergleich zu dem Anschlussstück 12 aus einem anderen Kunststoff hergestellt sein, der wegen der höheren Beanspruchung des Entriegelungsrings 40 eine höhere mechanische Festigkeit aufweist.

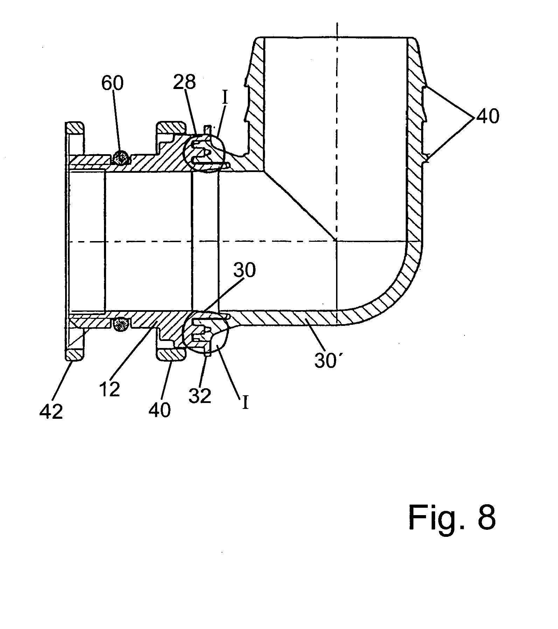

Fig. 8 zeigt eine alternative Ausführungsform der Schnellkupplung 10, bei der das Innenrohr 30 zweiteilig ausgeführt ist. An einen ersten Teil des Innenrohrs 30, der sich im Bereich der Führungsfläche 28 befindet, schließt sich ein weiterer Teil 30' an, der wie gezeigt um 90° abgewinkelt ist. Es sind auch andere Winkelstellungen zwischen dem weiteren Teil 30' und dem ersten Teil 30 des Innenrohrs möglich. Der weitere Teil 30' des Anschlussstücks kann an dem ersten Teil 30 beispielsweise durch Reibschweißen angebunden sein, wodurch ein Ineinanderfließen der jeweiligen Molekülketten eine optimale Dichtigkeit zwischen diesen Teilen erzielt wird. Der weitere Teil 30' des Innenrohrs ist mit einem sogenannten Tannenbaum- Profil 40 ausgestattet und eignet sich somit als ein Schlauch- oder Rohranschluss. Bei der Herstellung aus Kunststoff werden das Anschlussstück 12 mit dem ersten Innenrohr 30 und das weitere Innenrohr 30' jeweils separat voneinander spritzgegossen, bevor sie wie erläutert miteinander reibverschweißt werden. Eine Verbindung des weiteren Innenrohrs 30' mit dem ersten Innenrohr 30 durch andere Fügeverfahren ist ebenfalls möglich.

## Patentansprüche

1. Schnellkupplung (10) für ein Rohrsystem, mit
- einem Anschlussstück (12), das mit einem separaten Anschlussstutzen verbindbar ist,
- an dem Anschlussstück (12) vorgesehenen Rastmitteln (26), die bei einem Verbinden des Anschlussstücks (12) mit dem Anschlussstutzen mit komplementären Rastmitteln des Anschlussstutzens verrastbar sind, und mit
an dem Anschlussstück geführten und axial dazu verschiebbaren Entriegelungsmitteln (40, 42, 44), die bei einem Verbinden des Anschlussstücks (12) mit dem Anschlussstutzen in einer Ausgangsstellung verbleiben, und die infolge eines axialen Verschiebens (x) in eine Betätigungsstellung in einer Richtung weg von dem Anschlussstutzen die Rastmittel (26) des Anschlussstücks (12) außer Eingriff mit den Rastmitteln des Anschlussstutzens bringen, so dass das Anschlussstück (12) von dem Anschlussstutzen abnehmbar ist, **dadurch gekennzeichnet dass**
die Entriegelungsmittel (40) in Form eines Ringelements das Anschlussstück (12) umfassen, wobei der Entriegelungsring (40) ein dem Anschlussstutzen (12) gegenüberliegendes vorderes Ringelement (42) und ein dem Anschlussstutzen entgegengesetztes hinteres Ringelement (44) aufweist, wobei ein Umfangsabschnitt des vorderen Ringelements (42) mit der Schräge (48) für ein Zusammenwirken mit der Anlaufschräge (24) des freien Endes des Stegs (20) versehen ist und das hintere Ringelement (44) auf der Führungsfläche (28) des Anschlussstücks (12) geführt ist.

2. Schnellkupplung (10) nach Anspruch 1, bei der die Rastmittel des Anschlussstücks (12) einen Schnapphaken (26) aufweisen, der mit den Rastmitteln des Anschlussstutzens außenseitig in Verbindung steht.

3. Schnellkupplung (10) nach Anspruch 2, bei der die Rastmittel des Anschlussstücks in Form zumindest eines an einer Außenseite des Anschlussstücks vorgesehenen freikragenden Stegs (20) ausgebildet sind, der sich in Richtung des Anschlussstutzens erstreckt, und an dessen freien Ende der Schnapphaken (26) angeordnet ist, wobei das freie Ende radial (y) zum Anschlussstück elastisch auslenkbar ist.

4. Schnellkupplung (10) nach Anspruch 3, bei der der Steg (20) aus einer im Wesentlichen achsparallen Position bezüglich des Anschlussstücks (12) radial elastisch auslenkbar ist.

5. Schnellkupplung (10) nach einem der Ansprüche 2 bis 5, bei der die Entriegelungsmittel (40) in ihrer Betätigungsstellung den Schnapphaken (26) radial (y) nach außen drücken.

6. Schnellkupplung (10) nach einem der Ansprüche 3 bis 5, bei der eine dem Anschlussstutzen zugewandte Stirnseite des freien Endes des Stegs mit einer Anlaufschräge (24) versehen ist.

7. Schnellkupplung (10) nach Anspruch 6, bei der die Entriegelungsmittel (40) mit einer Schräge (48) versehen sind, die komplementär zu der Anlaufschräge (24) des freien Endes des Stegs (20) ausgebildet ist.

8. Schnellkupplung (10) nach Anspruch 7, bei der die Schräge (48) der Entriegelungsmittel in ihrer Ausgangsstellung die Anlaufschräge (24) des freien Endes des Stegs (20) zumindest teilweise untergreift.

9. Schnellkupplung (10) nach einem der Ansprüche 1 bis 8, bei der an dem Anschlussstück (12) Verliersicherungen (32, 34, 52) vorgesehen sind, die ein beidseitiges Abgleiten der Entriegelungsmittel (40, 42, 44) von dem Anschlussstück (12) infolge eines axialen Verschiebens (x) dazu verhindern.

10. Schnellkupplung (10) nach Anspruch 9, bei der an einem hinteren Rand (18) des Anschlussstücks (12) zumindest ein Anschlagselement (32) ausgebildet ist, mit dem die Entriegelungsmittel (44) in ihrer Betätigungsstellung in Anlagekontakt kommen.

11. Schnellkupplung (10) nach einem der Ansprüche 9 oder 10, bei der an zumindest einer Längsseite des Stegs (20) eine Ausnehmung (34) ausgebildet ist und an den Entriegelungsmitteln (40) zumindest ein elastischer freikragender Haken (52) vorgesehen ist, der sich in Richtung des Anschlussstutzens erstreckt und gegen den Steg (20) vorgespannt ist, wobei das freie Ende des Hakens (52) in einer Ausgangsstellung der Entriegelungsmittel (40) in Eingriff mit der Ausnehmung (34) ist und bei einem axialen Verschieben (x) der Entriegelungsmittel außer Eingriff mit der Ausnehmung (34) gelangt.

12. Schnellkupplung (10) nach einem der Ansprüche 1 bis 11, bei der das Anschlussstück (12) an seiner Außenseite eine Führungsfläche (28) aufweist und die Entriegelungsmittel (40) ringförmig ausgebildet sind, wobei die Entriegelungsmittel für ein axiales Verschieben (x) auf der Führungsfläche (28) geführt sind.

13. Schnellkupplung (10) nach einem der Ansprüche 1 bis 12, bei der ein Außendurchmesser der Führungsfläche (24) auf einen Innendurchmesser des Entriegelungsrings (40) geeignet angepasst ist.

14. Schnellkupplung (10) nach einem der Ansprüche 3 bis 13, bei der das vordere Ringelement (42) und das hintere Ringelement (44) über zumindest einen Brückenabschnitt (46) miteinander verbunden sind, der den freikragenden Steg (20) mittig einfasst und ein Auslenken des Stegs (20) radial nach außen (y) zulässt.

15. Schnellkupplung (10) nach einem der Ansprüche 1 bis 14, bei der ein axiales Verschieben (x) der Entriegelungsmittel (40) in ihre Bestätigungsstellung gleichzeitig das Anschlussstück (12) von dem Anschlussstutzen löst.

16. Schnellkupplung (10) nach einem der Ansprüche 1 bis 15, bei der in einer Außenumfangsfläche (36) des Anschlussstücks zumindest ein O-Ring (60) angeordnet ist.

17. Schnellkupplung (10) nach einem der Ansprüche 1 bis 16, die aus Kunststoff hergestellt ist.

18. Schnellkupplung (10) nach Anspruch 17, die bezüglich des Anschlussstücks (12) als einteiliges Kunststoff- Spritzgussteil gefertigt ist.

19. Schnellkupplung (10) nach Anspruch 17 oder 18, bei der ein Innenrohr (30) zweiteilig ausgeführt ist, wobei ein dem freien Ende (14) des Anschlussstücks (12) entgegengesetzter Teil (30') des Innenrohrs mit dem Anschlussstück (12) verschweißt ist.

20. Schnellkupplung (10) nach Anspruch 17, bei der der Kunststoff ein Polyamid, insbesondere ein Polyamid 66 ist.
